# EUROPEAN PATENT APPLICATION

(11) **EP 1 116 971 A1**
(43) Date of publication of application: **18.07.2001**
(21) Application number: 01100831.5
(22) Date of filing: 15.01.2001
(51) Int. Cl.: G02B 6/16, G02B 6/12, G02B 5/18

(54) **Long period optical fiber grating**

(30) Priority: 14.01.2000 KR 2000001744
(71) Applicant: SAMSUNG ELECTRONICS CO., LTD., Suwon-City, Kyungki-do (KR)
(72) Inventor: Jang, Joo-Nyung, c/o Samsung Electronics Co,Ltd, Gu, Sungnam-Shi, Kyunggi-Do (KR)
(74) Representative: Grünecker, Kinkeldey, Stockmair & Schwanhäusser Anwaltssozietät

(57) **Abstract**

Disclosed is a long period optical fiber grating including a plurality of sections. The sections have different grating periodicity. The distribution of the grating periodicity is asymmetric around a central reference section. Also, the sections have their lengths twice or more as long as the respective grating periodicity.

## Description

The present invention generally relates to an optical fiber grating, and more particularly, to a long period optical fiber grating.

In general, a representative method for forming an optical fiber grating is characterized by irradiating ultraviolet rays to a photosensitive optical fiber to modify a refractive index of the optical fiber.

When the ultraviolet rays are irradiated to the photosensitive optical fiber, the modified refractive index of the optical fiber is maintained permanently or at least for several decades. These results are initially regarded to be limited to germanium-doped optical fibers, but these results are currently found to occur in optical fibers made of various materials containing no germanium.

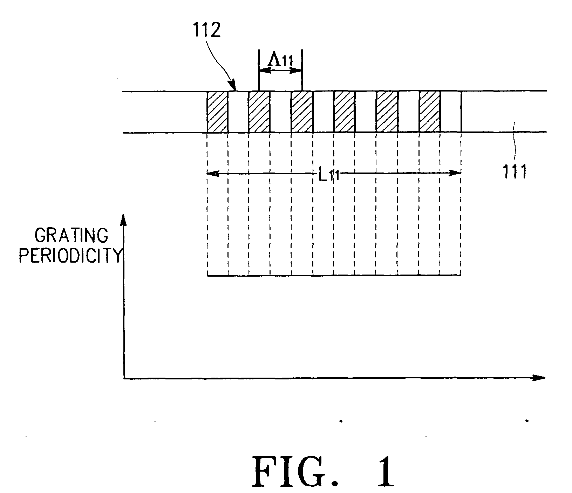

FIG. 1 is a diagram illustrating a long period optical fiber having constant grating periodicity according to a related art. The long period optical fiber 112 in FIG. 1 has a constant grating periodicity A₁₁ versus the whole grating length L₁₁.

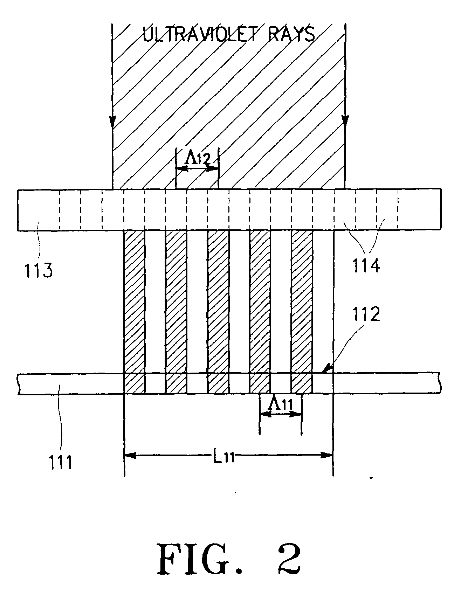

FIG. 2 is a diagram illustrating a method for fabricating the long period optical fiber grating 112 drawn in FIG. 1. The conventional method for fabricating long period optical fibers is similar to a photolithography process, which is often performed in semiconductor manufacturing companies. To be specific, the conventional method is characterized by irradiating ultraviolet rays to an amplitude mask 113 composed of a plurality of slits 114, so as to pattern the shape of the amplitude mask on an optical fiber 111. In the process, the long period optical fiber grating 112 having a prescribed periodicity A₁₁ and its length L₁₁ is formed on the optical fiber 111. Further, a lens system, which is not drawn, including a plurality of lenses is secured to a top of the amplitude mask 113 to modify the periodicity A₁₁ of the long period optical fiber 112. As a consequence, the shape of the amplitude mask 113 is such enlarged or contracted as to be patterned on the optical fiber 111.

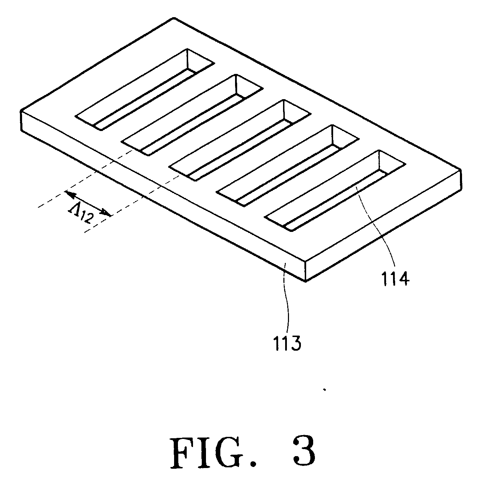

FIG. 3 is a cross view illustrating the amplitude mask 113 drawn in FIG. 2. As described, the amplitude mask 113 has a similar shape to the long period optical fiber 112 drawn in FIG. 2. The amplitude mask 113 has a specific periodicity A_{12,} and includes a plurality of aligned slits 114.

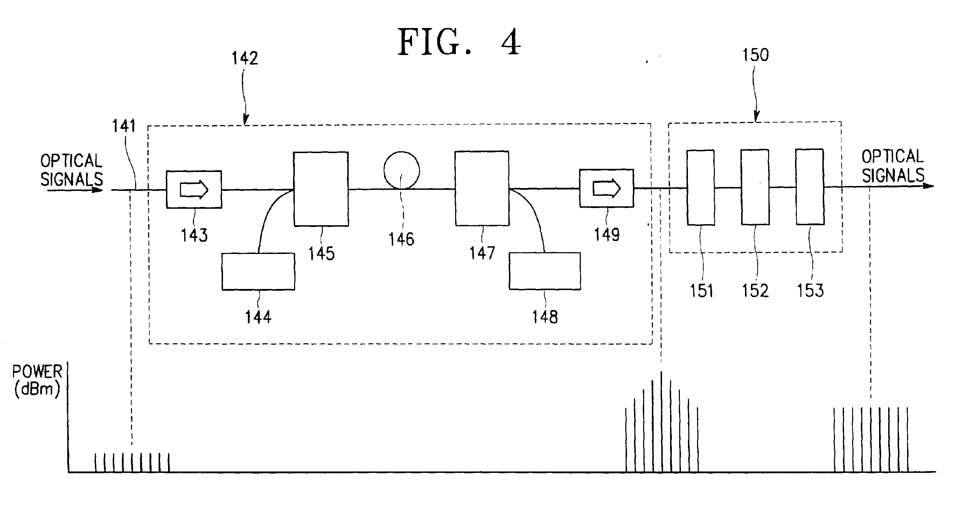

FIG. 4 is a diagram illustrating an optical fiber amplifier having a conventional attenuator. Optical signals led toward inside of an optical fiber 141 becomes attenuated due to loss characteristics of the optical fiber 141. Therefore, the switching must be done at either the optical signal's point of origination or termination. The switching machine generally includes an optical amplifier for amplifying attenuated optical signals. Before the optical amplifier is introduced at first, the optical signals had often been amplified in an electric manner. That is, the optical signals are converted into electric signals, which are amplified. The amplified electric signals are then converted into optical signals. However, the optical signals are amplified without no necessity of conversion into electric signals by means of the generally used optical amplifier. The most popular one among the optical amplifiers is an erbium doped fiber amplifier, which amplifies optical signals directed to inside of an optical fiber by using a population inversion of erbium ion. FIG. 4 illustrates the erbium doped optical amplifier 142 including an optical fiber 141 acting as an optical signal transmitter, isolators 143 and 149 for interrupting reverse lights, an erbium doped optical fiber 146 for amplifying the optical signals, pumping sources 144 and 148 outputting pumping lights for filtering erbium ions within the erbium doped optical fiber 146, and optical couplers 145 and 147 for coupling the pumping lights with the optical fiber 141. An attenuator is conventionally secured to one end of the erbium doped optical fiber amplifier 142 to flatten a gain curve according to a wavelength of the erbium doped optical fiber amplifier 142. Referring to FIG. 4, when optical signals are inputted from 9 channels into the erbium doped optical fiber amplifier 142 so as to be amplified, power distribution of the optical signals outputted from the erbium doped optical fiber amplifier 142 is irregular according to the channels. This is because gains by wavelengths of the erbium doped optical fiber amplifier 142 do not have one identical value. As for optical communications, a wavelength division multiplexing method is currently used to transmit or receive a plurality of channels through a single optical fiber. Wavelength intervals of the channels are now in a trend to become shorter owing to limit of an available wavelength band. Thus, if the power distribution by channels is irregular as illustrated above, probability of losing information transmitted to the channels are subsequently increased due to noise or interference between the channels. The additional attenuator 150 is used to flatten the power by channels of the amplified optical signals, in general. An optical fiber grating 151, 152 or 153 including the attenuator 150 has a loss curve of a Gaussian-like function type, representing a peak value in its peak wavelength.

If an available wavelength band of the transmitted optical signals is narrow, only one long period optical fiber grating 151, 152 or 153 would be required for gain flattening. Alternatively, in case of a broad available wavelength band, a plurality of long period optical fiber gratings 151, 152 and 153 are all used for the gain flattening.

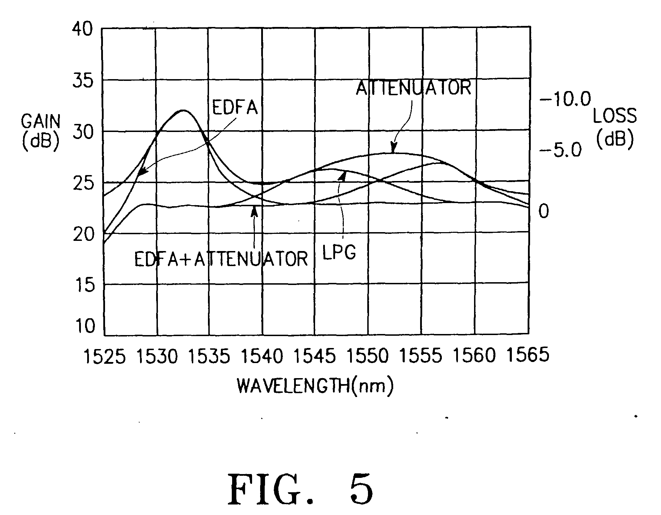

FIG. 5 is a diagram illustrating a method for flattening the gain curve of the erbium doped optical fiber amplifier by means of the conventional attenuator. As stated, the erbium doped optical fiber amplifier has, preferably, a flattened gain curve to some extent at an available wavelength band. As drawn in FIG. 5, if the available wavelength band is so large to reach 40 nm, flattening the gain curve EDFA of the erbium doped optical fiber amplifier is almost impossible with one loss curve LPG having a specific shape, namely the Guassian-like function type.

A basic concept of the gain flattening is that the more gain the wavelength has, the more loss the wavelength suffers, while the less gain the wavelength has, the less loss the wavelength suffers. Thus, an entire loss curve (attenuator) formed by overlapping two or more optical fiber gratings has, preferably, the similar shape to the gain curve EDFA of the erbium doped optical fiber amplifier. As a result, the entire gain curve EDFA + attenuator becomes flattened to some extent since the curve is formed by the combination of the erbium doped optical fiber amplifier and two or more optical fiber gratings.

As described hereinabove, if the available wavelength band of the erbium doped optical fiber amplifier to be gain-flattened is large, the combination of the plurality of long period optical fiber gratings is conventionally required for the attenuation purpose, thereby disadvantageously deteriorating integration of the attenuator. In addition, the loss curves of the respective long period optical fiber gratings have not a variety of shapes with the combination of the loss curves, thereby hardly obtaining a loss curve of desired shape except a specific type, such as a Gaussian-like function.

It is, therefore, an object of the present invention to provide a long period optical fiber grating capable of realizing various loss curves according to channels.

It is another object of the present invention to provide a long period optical fiber grating applicable over a broad wavelength band.

To achieve the above objects, there is provided a long period optical fiber grating according to the present invention. The optical fiber grating includes a plurality of sections having different grating periodicity whose distribution is preferably asymmetrical around a reference section, and having their lengths twice or more as long as the grating periodicity. The reference section is located at the center of the grating.

A period of sections which are arranged left and right with respect to a predetermined reference section is different from each other, resulting in being formed asymmetrically.

The above and other objects, features and advantages of the present invention will become more apparent from the following detailed description when taken in conjunction with the accompanying drawings, in which:
FIG. 1 is a diagram illustrating a long period optical fiber grating having constant refractive index modulations according to the related art;
FIG. 2 is a diagram illustrating a method for fabricating the long period optical fiber grating drawn in FIG. 1;
FIG. 3 is a cross view illustrating an amplitude mask drawn in FIG. 2;
FIG. 4 is a diagram illustrating an optical fiber amplifier having an attenuator according to the related art;
FIG. 5 is a diagram illustrating a process for flattening a gain curve of an erbium doped optical fiber amplifier by means of a conventional attenuator;
FIG. 6 is a diagram illustrating a progress of growth of a loss curve according to a length variance of a long period optical fiber grating;
FIG. 7 is a diagram illustrating a progress of growth of a loss curve according to a periodicity variance of a long period optical fiber grating;
FIG. 8 is a diagram illustrating a long period optical fiber grating according to a preferred embodiment of the present invention;
FIG. 9 is a diagram illustrating a transmittance by wavelengths with respect to the long period optical fiber grating drawn in FIG. 8;
FIG. 10 is a diagram illustrating a device for fabricating the long period optical fiber grating according to the present invention; and
FIG. 11 to FIG. 13 are diagrams illustrating operations of the device for fabricating the long period optical fiber grating drawn in FIG. 10.

A preferred embodiment of the present invention will be described herein below with reference to the accompanying drawings. In the following description, well-known functions or constructions are not described in detail since they would obscure the invention in unnecessary detail.

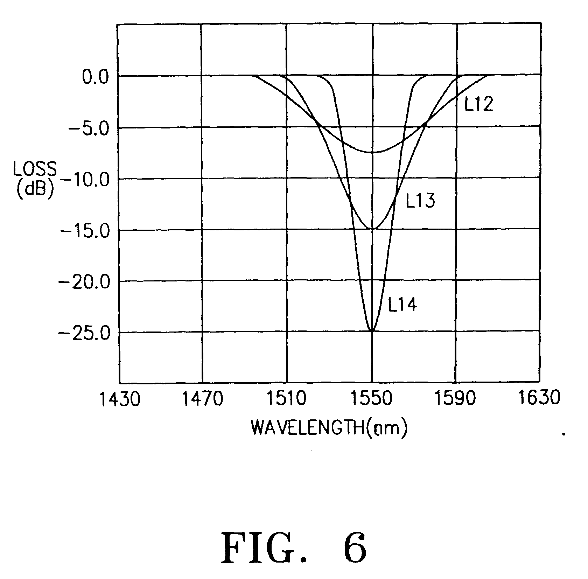

FIG. 6 is a diagram illustrating a progress of growth of a loss curve according to a length variance of a long period optical fiber grating. Referring to FIG. 6, loss curves L12, L13 and L14 are drawn with respect to three long period optical fiber gratings having different lengths, respectively. Respective periodicity and refractive index modulations of the three long period optical fiber gratings are all identical. The respective lengths L12, L13 and L14 of the long period optical fiber gratings have the following relation: L12<L13<L14. As shown in FIG. 6, the longer length of the long period optical fiber grating is, the larger the required maximum loss at a peak wavelength is, and the narrower the band width is. However, the shape continues to be the Gaussian-like function type.

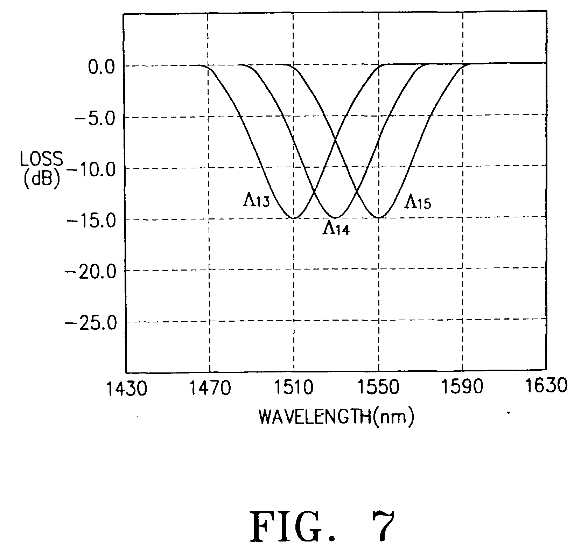

FIG. 7 is a diagram illustrating a progress of growth of a loss curve according to a periodicity variance of the long period optical fiber grating. FIG. 7 illustrates loss curves A₁₃, A₁₄ and A₁₅ with respect to long period optical fiber gratings having different periodicity, respectively. The length and refractive index modulations of the three long period optical fiber gratings are the same. The periodicity A₁₃, A₁₄ and A₁₅ of the long period optical fiber gratings have the following relation: A₁₃<A₁₄<A₁₅. Referring to FIG. 7, as the periodicity of the long period optical fiber grating becomes longer, the peak wavelength is led to a longer wavelength.

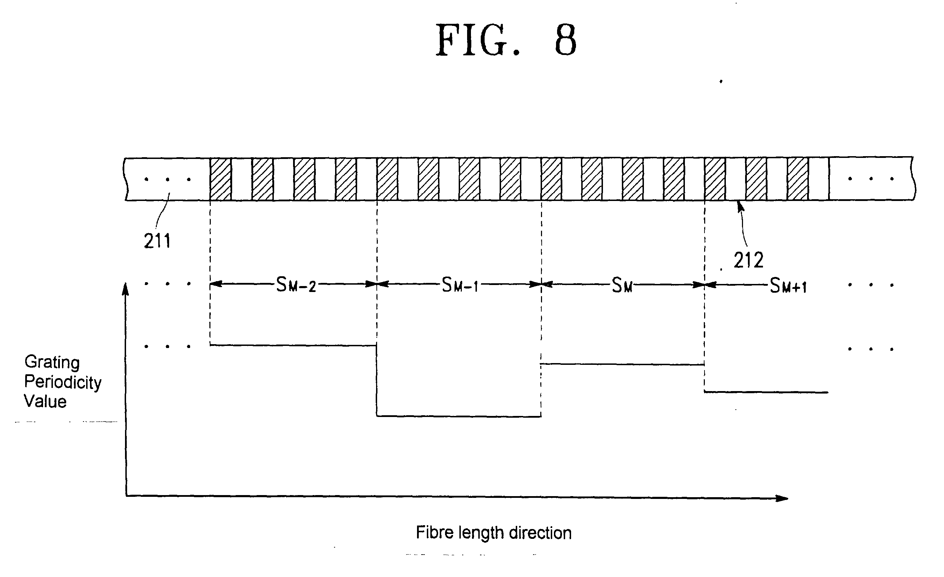

FIG. 8 is a diagram illustrating an optical fiber grating according to a preferred embodiment of the present invention. The long period optical fiber 212 according to the present invention is divided into thirty sections (S_{1,} S₂, ..., S_{M,} ..., S₂₉, S₃₀) along its elevation direction. Refractive index modulations of the sections (S_{1,} S₂, ..., S_{M}, ..., S₂₉, S₃₀) are the same. Grating periodicity of the thirty sections (S_{1,} S₂, ..., S_{M}, ..., S_{29,} S₃₀), however, is not identical. TABLE 1 set out below specifies grating periodicity by sections of the long period optical fiber grating 212.

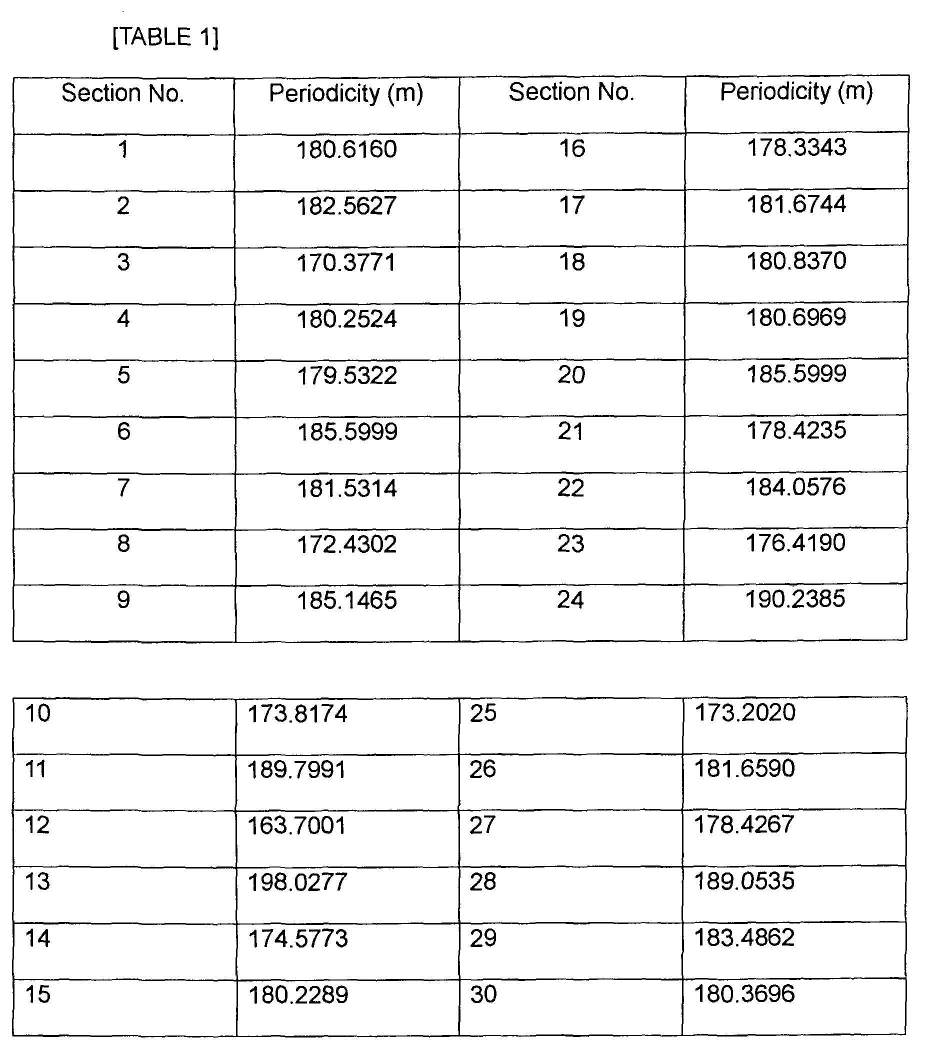

Here, the section number is determined in a sequence order along the elevation direction of the long period optical fiber grating 212.

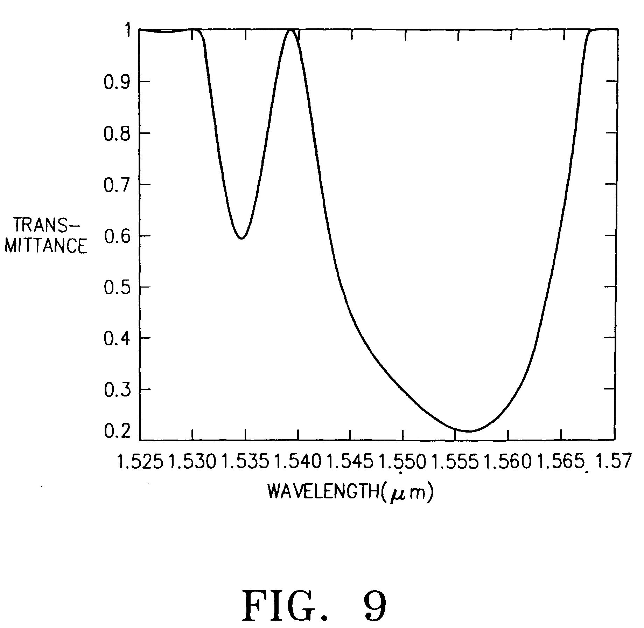

FIG. 9 is a diagram illustrating a transmittance of the long period optical fiber grating 212 in FIG. 8. The conventional long period optical fiber grating is of the Gaussian-like function shape, namely a graph having a minimum value, while the drawn graph in FIG. 9 has two minimum values in the vicinity of 1.535 nm and 1.557 nm. A transmittance curve is able to be formed with only one long period optical fiber grating according to the present invention, in contrast to the related art in which such transmittance curve can be formed with at least two gratings. In other words, the transmittance curve by wavelengths is able to be realized with one long period optical fiber grating according to the present invention, obviating the conventional problem of combining a plurality of long period optical fiber gratings.

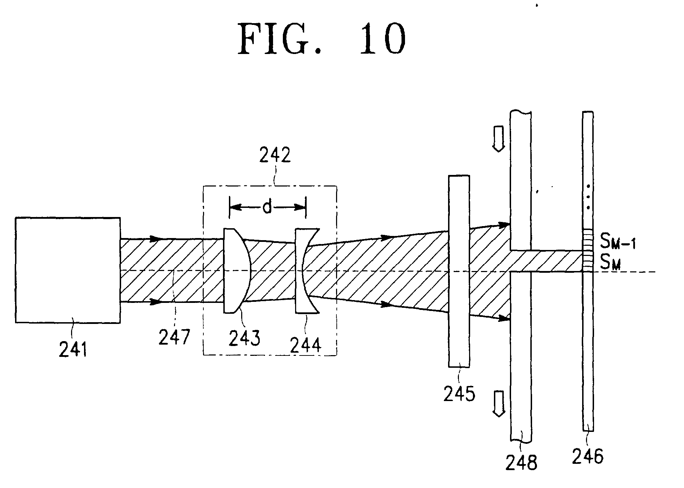

FIG. 10 is a diagram illustrating a device for fabricating the long period optical fiber grating according to the present invention. Ultraviolet rays outputted from an ultraviolet source 241 are emitted to a lens system 242 including a plat-convex lens 243 and a plat-concave lens 244. A distance d between the plat-convex lens 243 and the plat-concave lens 244 is adjusted to control a diverging point and a converging point of the ultraviolet rays emitted from the plat-concave lens 244. The ultraviolet rays emitting the optical system enter into an amplitude mask 245. The ultraviolet rays are selectively passed through the amplitude mask 245 including a plurality of slits having a specific periodicity. The ultraviolet rays passed through the amplitude mask 245 are emitted to the slits 248. The slits 248 function as an interrupter for interrupting the ultraviolet rays passed through the amplitude mask 245 from being emitted to another portion than a pertinent section S_{M..} Further, the slits 248 maintains their static positions for a pre-set time and move into a next section S_{M+1} after the pre-set time. At the same time when the slits move into the next section, the distance d between the plat-convex lens 243 and the plat-concave lens 244 comprising the optical system 242 is adjusted depending on the grating periodicity of the next section S_{M+1}. In other words, the grating periodicity of each section forming the long period optical fiber grating installed on the optical fiber 246 is set to have a specific value by controlling the distance d between the plat-convex lens 243 and the plat-concave lens 244.

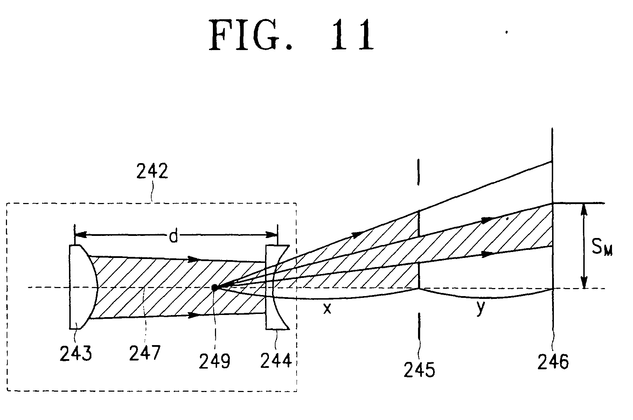

FIG. 11 to FIG. 13 are diagrams illustrating operations of the fabrication device in FIG. 10. The optical source 241 and the slits 248 in FIG. 10 are omitted for understating with more ease. The diverging point 249 of the optical system is movable on an optical axis 247 according to a control of the distance between the plat-convex lens 243 and the plat-concave lens 244. The grating periodicity of the pertinent section formed on the optical fiber 246 is determined based on the distance x between the diverging point 249 and the amplitude mask 245 and the distance y between the amplitude mask 245 and the optical fiber 246.

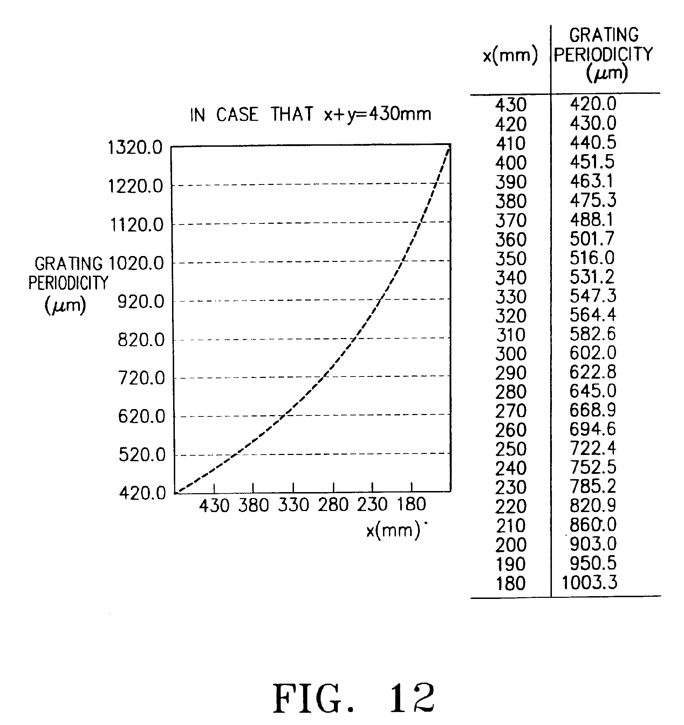

FIG. 12 is a graph illustrating a grating periodicity variance of the pertinent section in the fabrication device in FIG. 11. Referring to FIG. 12, the distance x+y between the diverging point 249 of the optical system 242 and the optical fiber 246 are fixed to be 430 mm and the distance x between the diverging point 249 and the amplitude mask 245 is varied. As shown in FIG. 12, it is found that as the distance between the diverging point 249 and the amplitude mask 245 becomes shorter, the grating periodicity of the pertinent section becomes longer.

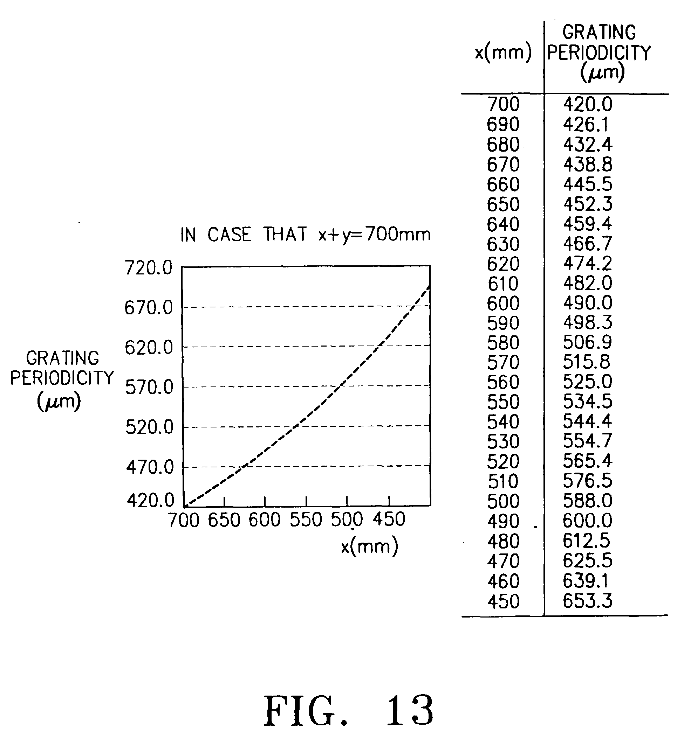

FIG. 13 is a graph illustrating a grating periodicity variance of the pertinent section in the fabrication device in FIG. 11. Referring to FIG. 13, the distance x+y between the diverging point 249 of the optical system 242 and the optical fiber 246 is fixed to be 700 mm, and the distance x between the diverging point 249 and the amplitude 245 is varied. As shown in FIG. 13, it is found as just like the result of the graph in FIG. 12 that as the distance between the diverging point 249 and the amplitude mask 245 becomes shorter, the grating periodicity of the pertinent section becomes longer. However, the variance extent is less than in the graph in FIG. 12.

So far, according to the present invention, the method used to form the long period optical fiber grating is characterized by irradiating the ultraviolet rays to the photosensitive optical fiber. However, the long period optical fiber grating according to the present invention can be realized in various ways. For example, a residual stress may be used to form the long period optical fiber grating. A refractive index of an optical fiber core is decreased due to the residual stress generated by a drawing tension under a photoelastic effect. If laser beams are irradiated to the optical fiber to relax one portion of the residual stress of the optical fiber core on a constant periodicity basis, the refractive index of the irradiated optical fiber core is varied, serving to form the optical fiber grating. The residual stress is classified into a thermal stress and a mechanical stress with the former caused by a difference between thermal expansion coefficients of the core and a clad, and the latter caused by a difference between viscosity coefficients of the core and the clad. The residual stress is relaxed by irradiating the laser beams to the optical fiber where the residual stress exists as stated above, or by transferring thermal energy of an electric arc to the optical fiber where the residual stress exists by means of the electric arc.

As described above, the optical fiber grating includes a plurality of sections having different grating periodicity whose distribution is preferably asymmetrical around a discretional reference section, and having their lengths twice or more as long as the grating periodicity, thereby enabling realizing a variety of loss curves by wavelengths.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A long period optical fiber grating
**characterized by**
comprising a plurality of sections which have different grating periodicity and have their lengths twice or more as long as the grating periodicity.

2. The grating of claim 1, wherein the plurality of sections which have different grating periodicity have a distribution which is asymmetrical around a reference section.

3. The grating of claim 1 or 2, wherein refractive index modulations of the sections are an identical value.

4. The grating of any of claims 1 to 3, wherein lengths of the sections are an identical value.

5. The grating of any of claims 1 to 4, wherein the long period optical fiber grating is formed by periodically relaxing a residual stress of the optical fiber.

6. The grating of claim 5, wherein the residual stress of the optical fiber is periodically relaxed by irradiating laser beams thereto.

7. The grating of claim 5, wherein the residual stress of the optical fiber is periodically relaxed by means of an electric arc.

8. The grating of any of claims 1 to 7, wherein the long period optical fiber grating is formed by irradiating ultraviolet rays selectively transmitted by an amplitude mask to the photosensitive optical fiber.
